# EUROPEAN PATENT SPECIFICATION

(11) **EP 4 497 682 B1**
(45) Date of publication and mention of the grant of the patent: **26.08.2026**
(21) Application number: 24191516.4
(22) Date of filing: 29.07.2024
(51) Int. Cl.: B64D 9/00

(54) **GUIDE ROLLER WITH ENHANCED CHIP, CUT, AND ABRASION RESISTANCE FOR CARGO DOORWAY ENTRANCE**
FÜHRUNGSROLLE MIT VERBESSERTER SPAN-, SCHNITT- UND ABRIEBFESTIGKEIT FÜR FRACHTTÜREINGANG
ROULEAU DE GUIDAGE AVEC UNE RÉSISTANCE AMÉLIORÉE À L'ÉCAILLAGE, À LA COUPURE ET À L'ABRASION POUR L'ENTRÉE D'UNE PORTE DE CHARGEMENT

(30) Priority: 27.07.2023 IN 202341050785; 14.09.2023 US 202318467215
(43) Date of publication of application: 29.01.2025
(73) Proprietor: Goodrich Corporation, Charlotte, NC 28217-4578 (US)
(72) Inventor: VENKATESHAIAH, Harish, Bangalore (IN); PATTABHIRAM, Abhiram, Bangalore (IN)
(74) Representative: Dehns

(56) References cited:
- EP-A1- 3 835 226
- EP-B1- 0 858 962
- WO-A1-01/85834
- CA-A1- 3 127 377
- CN-B- 101 678 643
- CN-B- 108 795 267
- CN-U- 216 884 823
- US-A1- 2015 239 560

## Description

### CROSS-REFERENCE TO RELATED APPLICATIONS

This application claims priority to, and the benefit of, India Provisional Patent Application No. 202341050785, filed July 27, 2023, and titled "GUIDE ROLLER WITH ENHANCED CHIP, CUT, AND ABRASION RESISTANCE FOR CARGO DOORWAY ENTRANCE".

### FIELD

The present disclosure relates to cargo handling systems, and more specifically, to a guide roller with enhanced chip, cut, and abrasion resistance for cargo doorway entrance.

### BACKGROUND

Today's rapidly evolving and uncertain world has driven the need for increased flexibility and modularity into modern aircraft cargo handling systems. Typical cargo handling systems provide for the loading and unloading of unit load device (ULDs). During cargo loading and unloading, the ULDs regularly come in contact with doorway guide rollers and, which results in the guide rollers undergoing various types of impact loads by sharp, blunt portions of the ULDs. Such random and sudden loading patterns leads to irregular wear, tear, cutting, and chipping of the doorway guide roller materials which eventually reduces the durability of the guide rollers and subsequent failure of the guide roller. US2015/239560A1 and EP0858962B1 relate to conveyer rollers. EP3835226A1 relates to an overmolded two-component friction element in a plastic pallet.

### SUMMARY OF THE CLAIMED INVENTION

A method of manufacturing a guide roller for a cargo doorway of an aircraft is provided as defined in claim 1. Optional embodiments are defined by the depended claims.

### SUMMARY OF THE DISCLOSURE

Disclosed herein is a guide roller for a cargo doorway of an aircraft. The guide roller includes a mandrel having a first end, a second end, and a plurality of cavities disposed between the first end and the second end; and a material injected into an inside of the plurality of cavities of the mandrel.

The material is a rubber compound. The rubber compound is injected into the inside of the plurality of cavities of the mandrel via openings in the first end or the second end of the mandrel. In various embodiments, the guide roller further includes an adhesive disposed between the mandrel and the material. In various embodiments, the guide roller further includes a primer disposed between the mandrel and the adhesive.

In various embodiments, the rubber compound includes carboxylated nitrile rubber (XNBR) as the base polymer, a reinforcing filler and at least one of antioxidants, resins, plasticizers, accelerator activators, fungicides, accelerators, or magnesium carbonate treated and high oil treated version of sulfur. In various embodiments, the reinforcing filler is monolayer graphene with a particle size (platelet) of between 4 micrometers and 16 micrometers.

In various embodiments, the rubber compound includes hydrogenated nitrile rubber (HNBR) as the base polymer, a reinforcing filler and at least one of antioxidants, resins, plasticizers, accelerator activators, fungicides, crosslinking agent, or crosslinking peroxide. In various embodiments, the reinforcing filler is monolayer graphene with a particle size (platelet) of between 4 micrometers and 16 micrometers.

In various embodiments, the guide roller further includes a bearing disposed in each end of the mandrel.

Also disclosed herein is a method of manufacturing a guide roller for a cargo doorway of an aircraft. The method includes forming a mandrel having a first end and a second end and injecting a rubber injection molding compound injection into the mandrel.

The mandrel comprises a plurality of cavities and the rubber injection molding compound is injected into the plurality of cavities of the mandrel via the first end or the second end of the mandrel. In various embodiments, the method includes, prior to injecting the rubber injection molding compound into the plurality of cavities of the mandrel, coating the plurality if cavities of the mandrel with a primer and then with an adhesive. In various embodiments, the method further includes, prior to injecting the rubber injection molding compound into the plurality of cavities of the mandrel, roughening an inner surface of each of the plurality of cavities of the mandrel. In various embodiments, the method further includes, after roughening, passivating the plurality of cavities of the mandrel and the at least one end cap.

In various embodiments, the rubber injection molding compound includes carboxylated nitrile rubber (XNBR) as the base polymer, a reinforcing filler and at least one of antioxidants, resins, plasticizers, accelerator activators, fungicides, accelerators, or magnesium carbonate treated and high oil treated version of sulfur. In various embodiments, the reinforcing filler is monolayer graphene with a particle size (platelet) of between 4 micrometers and 16 micrometers.

In various embodiments, the rubber injection molding compound includes hydrogenated nitrile rubber (HNBR) as the base polymer, a reinforcing filler and at least one of antioxidants, resins, plasticizers, accelerator activators, fungicides, crosslinking agent, or crosslinking peroxide. In various embodiments, the reinforcing filler is monolayer graphene with a particle size (platelet) of between 4 micrometers and 16 micrometers.

In various embodiments, the method includes disposing a bearing in each end of the mandrel.

The foregoing features and elements may be combined in any combination, insofar as they fall within the scope of the appended claims. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a schematic view of an aircraft being loaded with cargo, in accordance with various embodiments.
FIG. 1B illustrates a perspective view of an aircraft cargo compartment, in accordance with various embodiments.
FIG. 2 illustrates a flowchart of a four-roll calendering process for combining a first rubber wrapping compound with a fabric and preparing directional calendered fabric, in accordance with various embodiments.
FIGS. 3A and 3B illustrate a flowchart for manufacturing a layered guide roller, in accordance with various embodiments.
FIG. 4A illustrates a mandrel with a bearing slot coated with a primer and an adhesive, in accordance with various embodiments.
FIG. 4B illustrates a mandrel coated with a primer and an adhesive being wrapped with a first layer of second rubber wrapping compound, in accordance with various embodiments.
FIG. 4C illustrates a mandrel wrapped with a first layer of a second rubber wrapping compound being wrapped with a first layer of left facing angle-biased calendered fabric, in accordance with various embodiments.
FIG. 4D illustrates a mandrel wrapped with a first layer of left facing angle-biased calendered fabric being wrapped with a first layer of right facing angle-biased calendered fabric, in accordance with various embodiments.
FIG. 4E illustrates a mandrel wrapped with a first layer of right facing angle-biased calendered fabric being wrapped with a first layer of straight calendered fabric, in accordance with various embodiments.
FIG. 4F illustrates a mandrel wrapped with a first layer of straight calendered fabric being wrapped with second layer of the second rubber wrapping compound, in accordance with various embodiments.
FIG. 4G illustrates a completely wrapped guided roller, in accordance with various embodiments.
FIG. 5 illustrates a flowchart for manufacturing an injection molded guide roller, in accordance with various embodiments.
FIG. 6 illustrates an end of a mandrel with a bearing slot including a plurality of openings through which the rubber compound will be injected so as to provide a uniform injection process, in accordance with various embodiments.
FIG. 7 illustrates an end of a mandrel with a bearing slot including a plurality of openings through which the rubber compound will be injected so as to provide a uniform injection process, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the appended claims. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

During cargo loading and unloading, the ULDs regularly come in contact with doorway guide rollers, which results in the guide rollers undergoing various types of impact loads through interactions with sharp, blunt portions of the ULDs. Such random and sudden loading patterns leads to irregular wear, tear, cutting, and chipping of the doorway guide roller materials which eventually reduces the durability of the guide rollers and subsequent failure of the guide roller.

Disclosed herein is a guide roller with enhanced chip, cut, and abrasion resistance for cargo doorway entrance. In various embodiments, to improve the durability and reliability of cargo doorway entrance guide roller, a set of material improvements and design changes are provided that include light weight polymer matrix composite materials including high-performance elastomer matrix and an ultra-light weight yet remarkably high strength reinforcing graphene as filler material along with other rubber additives. In various embodiments, the composite material utilizes elastomers along with graphene to improve the material performance of guide rollers. In various embodiments, materials changes of the guide rollers designs are modified to enhance the life of the cargo doorway entrance guide roller.

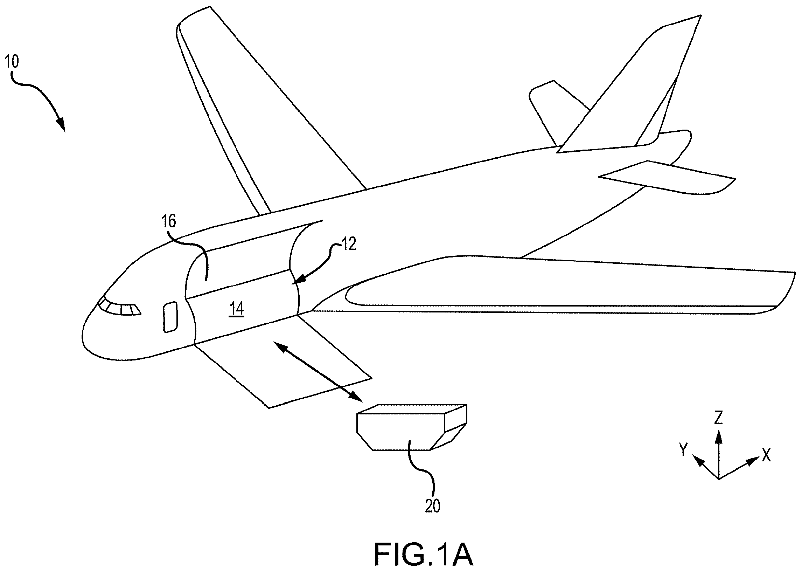

Referring now to FIG. 1A, a schematic view of an aircraft 10 having a cargo deck 12 located within a cargo compartment 14 is illustrated, in accordance with various embodiments. Aircraft 10 may comprise a cargo load door 16 located, for example, at one side of a fuselage structure of aircraft 10. A unit load device (ULD) 20, in the form of a container or pallet, for example, may be loaded through cargo load door 16 and onto cargo deck 12 of aircraft 10 or, conversely, unloaded from cargo deck 12 of aircraft 10. In general, ULDs are available in assorted sizes and capacities, and are typically standardized in dimension and shape. Once loaded with items destined for shipment, ULD 20 is transferred to aircraft 10 and then loaded onto aircraft 10 through cargo load door 16 using a conveyor ramp, scissor lift or the like. Once inside aircraft 10, ULD 20 is moved within cargo compartment 14 to a final stowed position. Multiple ULDs may be brought on-board the aircraft 10, with each ULD 20 being placed in a respective stowed position on cargo deck 12. After aircraft 10 has reached its destination, each ULD 20 is unloaded from aircraft 10 in similar fashion, but in reverse sequence to the loading procedure. To facilitate movement of ULD 20 along cargo deck 12, aircraft 10 may include a cargo handling system as described herein in accordance with various embodiments.

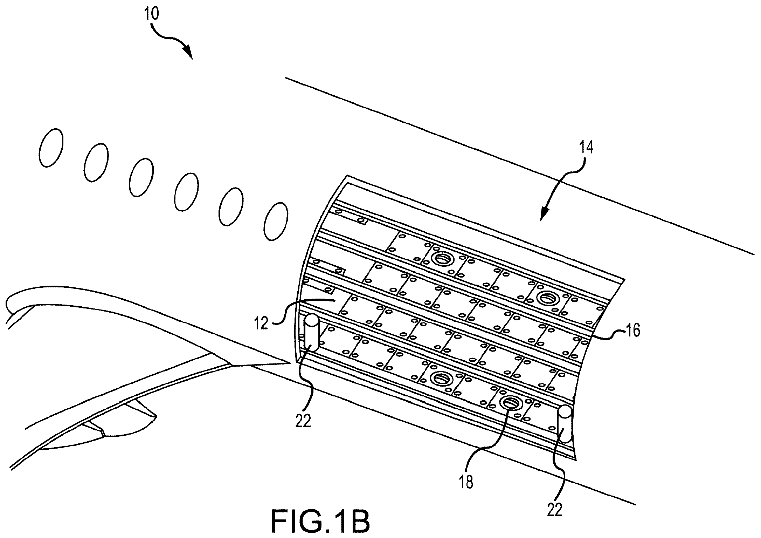

Referring now to FIG. 1B, in accordance with various embodiments a perspective view of an aircraft cargo compartment is illustrated. In various embodiments, the cargo load door 16 provides access to the cargo compartment 14 from outside the aircraft 10. In various embodiments, cargo (e.g., pallets or ULDs) may be loaded and unloaded through the cargo load door 16 and onto the cargo deck 12 of the aircraft 10. In various embodiments, as the cargo is loaded and unloaded through the cargo load door 16 and onto the cargo deck 12 of the aircraft 10, the cargo may regularly come in contact with doorway guide rollers 22 that are configured to guide the cargo onto of off of the cargo deck 12. In various embodiments, the cargo's regular contact with the doorway guide rollers 22 may result in the doorway guide rollers 22 undergoing various types of impact loads by sharp, blunt portions of the cargo. Such random and sudden loading patterns leads to irregular wear, tear, cutting, and chipping of the doorway guide rollers 22, which may eventually reduce the durability of the doorway guide rollers 22 and subsequent failure of the doorway guide rollers 22. In various embodiments, once the cargo is on the cargo deck 12, cargo compartment 14 may be equipped with one or more power drive units (PDUs) 18 configured to propel the cargo across cargo deck 12 in a desired direction.

In various embodiments, a doorway guide roller such as one of doorway guide rollers 22 of FIG. 1B, which is referred to simply as a guide roller hereafter, is provided with enhanced chip, cut, and abrasion resistance resulting in an improved guide roller. In various embodiments, the improved guide roller includes a set of material changes as well as a set of design changes for the rubber of the guide roller that improves the performance, durability, and reliability of the guide roller thereby extending the service life of the guide roller.

In various embodiments, the proposed material changes include the use of hydrogenated nitrile rubber (HNBR) and carboxylated nitrile rubber (XNBR) as polymer matrix materials that are compounded with graphene (single layer). In various embodiments, the graphene may have a particle size (platelet) of between 4 micrometers (157.5 microinches) and 16 micrometers (629.9 microinches). In various embodiments, the graphene may have a particle size (platelet) of between 7 micrometers (275.6 microinches) and 13 micrometers (511.8 microinches). In various embodiments, the graphene may have a particle size (platelet) of 10 micrometers (393.7 microinches).

In various embodiments, additional rubber compounding materials, i.e. additional rubber and/or synthetic rubber materials may be added to the polymer matrix materials and graphene. In various embodiments, these rubber compounds materials may be combined with various mandrel/roller designs to improve the performance, durability, and reliability of the guide roller.

In various embodiments, a benefit of using HNBR and XNBR polymer matrix materials is derived from the functional advantages of these polymer matrix materials in terms of excellent resistance against abrasion, higher resistance against cutting and chipping, improved bonding with metals, and ease of processing after compounding. In various embodiments, these polymer matrix materials, compounded with the rubber compounding materials, further enhances the resistance to cutting and chipping, provided by the graphene. In various embodiments, the graphene, due to its unique characteristics such as higher surface area, interacts with polymer matrix materials providing improved physical properties such as tensile strength, increased tear resistance, and enhanced resistance against cutting and chipping of rubber for the guide roller during usage.

In various embodiments, one or more rubber compounds may be generated for producing a first guide roller utilizing calendaring and wrapping over a mandrel. In various embodiments, a first rubber calendering compound, 'Compound A,' is produced. In various embodiments, the first rubber calendering compound starts with hydrogenated nitrile rubber (HNBR) as base polymer. In various embodiments, the HNBR may have an acrylonitrile content of between 24% and 44% with a Mooney viscosity of around 60 and 80 Mooney units (MU). In various embodiments, the HNBR may have an acrylonitrile content of between 29% and 39% with a Mooney viscosity of between 65 and 75 Mooney units (MU). In various embodiments, the HNBR has an acrylonitrile content of 34% with a Mooney viscosity of around 70 Mooney units (MU). In various embodiments, the residual double bond of the rubber (HNBR) may be between 1.5% and 9.5% for an effective sulfur curing to obtain sufficient cross link density. In various embodiments, the residual double bond of the rubber (HNBR) may be between 3.5% and 7.5% for an effective sulfur curing to obtain sufficient cross link density. In various embodiments, the residual double bond of the rubber (HNBR) is 5.5%, which is required for an effective sulfur curing to obtain sufficient cross link density. In various embodiments, the reinforcing filler is monolayer graphene with a particle size (platelet) of between 4 micrometers (157.5 microinches) and 16 micrometers (629.9 microinches). In various embodiments, the reinforcing filler is monolayer graphene with a particle size (platelet) of between 7 micrometers (275.6 microinches) and 13 micrometers (511.8 microinches). In various embodiments, the reinforcing filler is monolayer graphene with a particle size (platelet) of 10 micrometers (393.7 microinches). In various embodiments, other compounding ingredients included in the first rubber calendering compound may include antioxidants, resins, plasticizers, accelerator activators, accelerators, and/or a magnesium carbonate treated and high oil treated sulfur for improved dispersion in HNBR.

In various embodiments, the materials of the first rubber calendering compound may include: a base polymer or elastomer, such as hydrogenated nitrile rubber (HNBR); an accelerator activator, such as zinc oxide (ZnO); an accelerator activator, such as Stearic Acid; a reinforcing filler, such as graphene; an antioxidant, such as 4,4'-Bis(alpha,alphadimethylbenzyl)diphenylamine (CDPA); a plasticizer, such as tris (2-ethylhexyl) trimellitate (TOTM); a resin, such as phenol formaldehyde (PF) resin; a resin, such as coumarone indene (CI) resin; an accelerator, such as N,N-Dicyclohexyl-2-benzothiazolsulfene amide (DCBS); an accelerator-sulfur doner, such as tetra methyl thiuram disulfide (TMTD); and a high-oil treated sulfur, such as magnesium carbonate (MC) treated sulfur. In various embodiments, the HNBR may be between 80 to 120 parts per hundred. In various embodiments, the HNBR may be between 90 to 110 parts per hundred. In various embodiments, the HNBR may be 100 parts per hundred. In various embodiments, the ZnO may be between 1 to 9 parts per hundred. In various embodiments, the ZnO may be between 3 to 9 parts per hundred. In various embodiments, the ZnO may be 5 parts per hundred. In various embodiments, the Stearic Acid may be between .5 to 2.5 parts per hundred. In various embodiments, the Stearic Acid may be between 1 to 2 parts per hundred. In various embodiments, the Stearic Acid may be 1.5 parts per hundred. In various embodiments, the Graphene may be between 2 to 14 parts per hundred. In various embodiments, the Graphene may be between 5 to 11 parts per hundred. In various embodiments, the Graphene may be 8 parts per hundred. In various embodiments, the CDPA may be between 0.1 to 3.9 parts per hundred. In various embodiments, the CDPA may be between 1 to 3 parts per hundred. In various embodiments, the CDPA may be 2 parts per hundred. In various embodiments, the TOTM may be between 1 to 9 parts per hundred. In various embodiments, the TOTM may be between 3 to 7 parts per hundred. In various embodiments, the TOTM may be 5 parts per hundred. In various embodiments, the PF resin may be between 0.5 to 7.5 parts per hundred. In various embodiments, the PF resin may be between 3 to 6 parts per hundred. In various embodiments, the PF resin may be 4 parts per hundred. In various embodiments, the CI resin may be between 1 to 11 parts per hundred. In various embodiments, the CI resin may be between 4 to 8 parts per hundred. In various embodiments, the CI resin may be 6 parts per hundred. In various embodiments, the DCBS may be between 0.5 to 1.9 parts per hundred. In various embodiments, the DCBS may be between 1 to 1.4 parts per hundred. In various embodiments, the DCBS may be 1.2 parts per hundred. In various embodiments, the TMTD may be between 0.5 to 1.9 parts per hundred. In various embodiments, the TMTD may be between 1 to 1.4 parts per hundred. In various embodiments, the TMTD may be 1.2 parts per hundred. In various embodiments, the MC treated sulfur may be between 0.2 to 1.6 parts per hundred. In various embodiments, the MC treated sulfur may be between 0.6 to 1.3 parts per hundred. In various embodiments, the MC treated sulfur may be 0.9 parts per hundred.

In various embodiments, the materials of the first rubber calendering compound may be mixed in two stages. In various embodiments, stage 1, which may be referred to as a master batch, includes the base polymer or elastomer along with reinforcing fillers, accelerator activators, resins, plasticizers, and anti-oxidants. In various embodiments, the master batch is blended in an internal mixer with intermeshing type rotors. In various embodiments, the intermeshing internal mixer provides high shear blending or mixing to ensure a uniform material mix through high dispersion and distributive mixing actions with better temperature control of the compound.

In various embodiments, in a first step of preparing the master batch, rubber, i.e. the HNBR or XNBR, is added to a mixer and is mixed or masticated for approximately 10-30 seconds at a speed of between approximately 20-45 revolutions per minutes (rpm) under a ram down condition. A ram is a part of the mixer and a ram down condition is when the ram is in down condition. In various embodiments, in a second step, a reinforcing filler, i.e. the graphene, is added to the mixer and is mixed for approximately 10-45 seconds at a speed of approximately 10-40 rpm under the ram down condition. In various embodiments, in a third step, the remaining ingredients, such as ZnO, Stearic Acid, PF Resin, CI Resin, CDPA, or TOTM are added to the mixer and are mixed at approximately 40 rpm under the ram down condition until the rubber temperature reaches a temperature of 145-160°C (293 - 320 degrees Fahrenheit).

In various embodiments, the master batch mixing may be utilized not only for the first rubber calendering compound but for other compounds described hereafter. Accordingly, in various embodiments, only the materials specific to the rubber compound being produced at the time are added to the master batch. In various embodiments, in a first stage, i.e. the master batch stage, an intermeshing type internal mixer with a fill factor of up to between 65% and 70% is utilized. After completion of incorporation of all ingredients into master batch, the first rubber calendering compound is mixed until the rubber attains at temperature of between 145°C (293 degrees Fahrenheit) to 160°C (320 degrees Fahrenheit). In various embodiments, first rubber calendering compound is transferred to a two-roll mill, which forms the first rubber calendering compound into sheets. In various embodiments, the sheets of the first rubber calendering compound are dipped in a soap oil solution to avoid sticking to each other and stacked. In various embodiments, the stacked sheets of first rubber calendering compound are then stored at room temperature for a minimum period, i.e. approximately 24 hours. In various embodiments, during the storage, any undispersed or unevenly distributed rubber additives will distribute evenly in the rubber matrix.

In various embodiments, in a first step of preparing the final batch, the master batch rubber is added to a two-roll mill to ensure the rubber has reached a predetermined temperature. Once the master batch rubber has met the predetermined temperature, the master batch rubber is fed into a two-roll mill with an opening of a first dimension and multiple cuts are made on the rubber to make sure rubber warms up quickly and attains a smooth-running rolling band at the roll nips. In various embodiments, in a second step, the nip gap of the two-roll mill is closed to a second dimension, accelerators, i.e. DCBS or TMTD, are added to a two-roll mill, and multiple cuts are made to the rubber to make sure added ingredients are properly dispersed. In various embodiments, at a third step, the nip gap of the two-roll mill is closed to a third dimension, curing or cross-linking agents, i.e. MC treated sulfur, are added, and multiple cuts are made to the rubber to make sure added ingredient is properly dispersed. In various embodiments, the nip gap of the two-roll mill is opened to a further dimension and sheet out the rubber.

In various embodiments, a friction ratio of the two-roll mill may be 1:1.25 as such a friction ratio is sufficient for better shear forces on the rubber to ensure proper dispersion of the cure additives. In various embodiments, rolls of the two-roll mill have drilled holes for water circulation to maintain the roll temperatures at 28±2°C (35.6 degrees Fahrenheit). In various embodiments, continuous water circulation is required for the entire final compound mixing duration to ensure the roll temperatures are not above 30°C (86 degrees Fahrenheit). In various embodiments, the rubber temperature of the final batch should not be allowed to go more than 100-105°C. In various embodiments, the final batch of the first rubber calendering compound is allowed to stand at room temperature for approximately 24 hours to ensure proper dispersion and distribution of added curatives. After the standing time, the first rubber calendering compound is ready for further calendaring to form a first rubber wrapping compound.

In various embodiments, a second rubber wrapping compound, 'Compound B,' is produced. In various embodiments, the second rubber wrapping compound, which is utilized for wrapping on the first rubber wrapping compound, is also formulated with the hydrogenated nitrile rubber (HNBR) as base polymer. In that regard, a same HNBR rubber which was used for the first rubber wrapping compound, i.e. the calendering compound, is also utilized for the second rubber wrapping compound. In various embodiments, the reinforcing filler is monolayer graphene with a particle size (platelet) of between 4 micrometers (157.5 microinches) and 16 micrometers (629.9 microinches). In various embodiments, the reinforcing filler is monolayer graphene with a particle size (platelet) of between 7 micrometers (275.6 microinches) and 13 micrometers (511.8 microinches). In various embodiments, the reinforcing filler is monolayer graphene with a particle size (platelet) of 10 micrometers (393.7 microinches). In various embodiments, other compounding ingredients included in the second rubber wrapping compound may include antioxidants, fungicides, resins, plasticizers, accelerator activators, accelerators, and/or a magnesium carbonate treated and high oil treated version of sulfur for improved dispersion in HNBR.

In various embodiments, the materials of the second rubber wrapping compound may include: a base polymer or elastomer, such as hydrogenated nitrile rubber (HNBR); an accelerator activator, such as zinc oxide (ZnO); a reinforcing filler, such as graphene; an antiozonant, such as Microcrystalline (MC) wax; an antioxidant, such as 4,4'-Bis(alpha,alphadimethylbenzyl)diphenylamine (CDPA); a plasticizer, such as tris (2-ethylhexyl) trimellitate (TOTM); a resin, such as phenol formaldehyde (PF) resin; a fungicide additive; an accelerator, such as N,N-Dicyclohexyl-2-benzothiazolsulfene amide (DCBS); an accelerator-sulfur doner, such as tetra methyl thiuram disulfide (TMTD); and a high-oil treated sulfur, such as magnesium carbonate (MC) treated sulfur. In various embodiments, the HNBR may be between 80 to 120 parts per hundred. In various embodiments, the HNBR may be between 90 to 110 parts per hundred. In various embodiments, the HNBR may be 100 parts per hundred. In various embodiments, the ZnO may be between 1 to 9 parts per hundred. In various embodiments, the ZnO may be between 3 to 9 parts per hundred. In various embodiments, the ZnO may be 5 parts per hundred. In various embodiments, the Stearic Acid may be between .5 to 2.5 parts per hundred. In various embodiments, the Stearic Acid may be between 1 to 2 parts per hundred. In various embodiments, the Stearic Acid may be 1.5 parts per hundred. In various embodiments, the Graphene may be between 2 to 14 parts per hundred. In various embodiments, the Graphene may be between 5 to 11 parts per hundred. In various embodiments, the Graphene may be 8 parts per hundred. In various embodiments, the MC wax may be between 0.5 to 3.5 parts per hundred. In various embodiments, the MC wax may be between 1 to 3 parts per hundred. In various embodiments, the MC wax may be 2 parts per hundred. In various embodiments, the CDPA may be between 0.4 to 2.4 parts per hundred. In various embodiments, the CDPA may be between .9 to 1.9 parts per hundred. In various embodiments, the CDPA may be 1.4 parts per hundred. In various embodiments, the TOTM may be between 1 to 9 parts per hundred. In various embodiments, the TOTM may be between 3 to 7 parts per hundred. In various embodiments, the TOTM may be 5 parts per hundred. In various embodiments, the PF resin may be between 2 to 7 parts per hundred. In various embodiments, the PF resin may be between 3 to 6 parts per hundred. In various embodiments, the PF resin may be 4 parts per hundred. In various embodiments, the Fungicide may be between 0.1 to 0.9 parts per hundred. In various embodiments, the Fungicide may be between 0.3 to 0.7 parts per hundred. In various embodiments, the Fungicide may be 0.5 parts per hundred. In various embodiments, the DCBS may be between 0.1 to 1.9 parts per hundred. In various embodiments, the DCBS may be between .5 to 1.5 parts per hundred. In various embodiments, the DCBS may be 1 part per hundred. In various embodiments, the TMTD may be between 0.5 to 1.9 parts per hundred. In various embodiments, the TMTD may be between 1 to 1.4 parts per hundred. In various embodiments, the TMTD may be 1.2 parts per hundred. In various embodiments, the MC treated sulfur may be between 0.1 to 0.7 parts per hundred. In various embodiments, the MC treated sulfur may be between 0.3 to 0.5 parts per hundred. In various embodiments, the MC treated sulfur may be 0.4 parts per hundred.

In various embodiments, the formulation for the second rubber wrapping compound provided in Table 4 may be mixed in two stages. In various embodiments, stage 1, which may be referred to as a master batch, includes the base polymer or elastomer along with reinforcing fillers, accelerator activators, resins, plasticizers, fungicides, anti-ozonants, and anti-oxidants. In various embodiments, mixing of the master batch of the second rubber wrapping compound utilizes an internal mixer with intermeshing type rotors and is mixed in a similar manner to stage 1 of the first rubber calendering compound. In various embodiments, mixing of the final batch of the second rubber wrapping compound utilizers a two-roll mill in a similar manner to stage 2 of the first rubber calendering compound. In various embodiments, the order that materials are added to the master batch of the second rubber wrapping compound and a mixing action that is performed as each material is added is provided with regard to Compound 'A' described previously. In various embodiments, the order that materials are added to the final batch of the second rubber wrapping compound and a mixing action that is performed as each material is added is provided with regard to Compound 'A' described previously. In various embodiments, the rubber temperature of the final batch should not be allowed to go more than 100-105°C. In various embodiments, the maturation or aging of the master batch of the second rubber wrapping compound and final batch of the second rubber wrapping compound is approximately 24 hours at each stage.

In various embodiments, in order to manufacture a guide roller utilizing the first rubber calendering compound and the second rubber wrapping compound, the first rubber calendering compound may be further calendered with a fabric. In various embodiments, a fabric with polycaprolactam cords having a denier construction of 1260/2 may be selected because of its advantages such as high strength, high impact resistance, good fatigue resistance, and good adhesion properties. In various embodiments, a two-yarn construction with a 1260 denier is sufficient for the guide roller application. In various embodiments, the calendered fabric may be manufactured by coating the first rubber calendering compound onto a Resorcinol Formaldehyde Latex (RFL) dipped polycaprolactam fabric. In various embodiments, RFL dipping of polycaprolactam fabric improves the bonding with coating or calendaring rubber compound. In various embodiments, the calendering process may utilize a four-roll calendar so that the first rubber calendering compound is applied on both sides of the RFL dipped fabric.

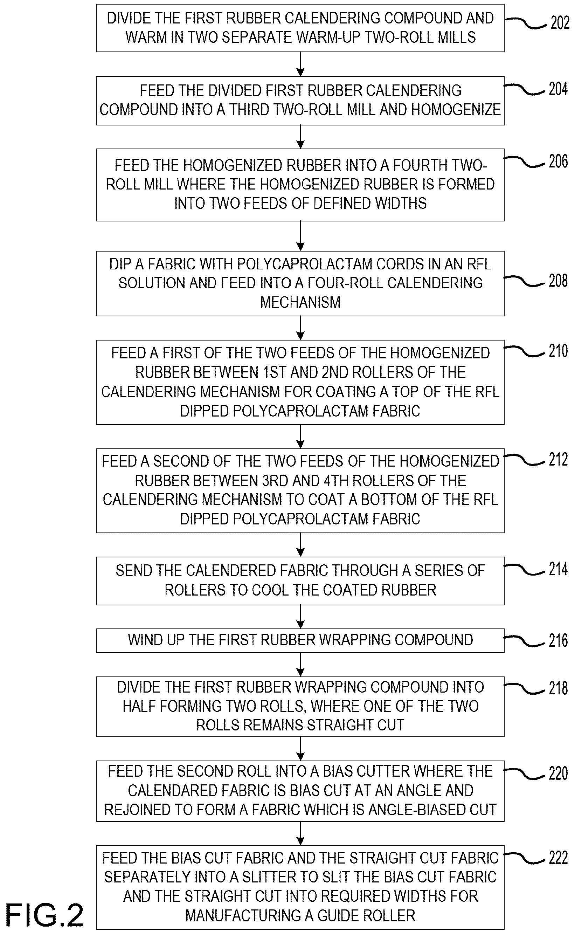

Referring to FIG. 2, a flowchart of a four-roll calendering process for combining a first rubber calendering compound with a fabric and preparing directional calendered fabric is illustrated, in accordance with various embodiments. At block 202, the first rubber calendering compound is divided in two and warmed in two separate warm-up two-roll mills. In various embodiments, one or more rollers of the two-roll mills may be knurled. In various embodiments, at least one of the two-roll mills may process the first rubber calendering compound utilizing back rolling. At block 204, after warming, the first rubber calendering compound is fed from the two separate two-roll mills into a third two-roll mill and is homogenized. In various embodiments, the third two-roll mill may be a homogenizing mill with smooth rollers where the warmed first rubber calendering compound is homogenized. At block 206, the homogenized rubber is fed into a fourth two-roll mill called a feed mill with smooth rollers where the homogenized rubber is formed into two feeds of defined widths. At block 208, a fabric with polycaprolactam cords is dipped in a Resorcinol Formaldehyde Latex (RFL) solution and fed into a four-roll calendering mechanism. At block 210, a first of the two feeds of the homogenized rubber is fed between the 1st and 2nd rollers of the calendering mechanism for coating a top of the RFL dipped polycaprolactam fabric and, at block 212, a second of the two feeds of the homogenized rubber is fed between the 3rd and 4th rollers of the calendering mechanism to coat a bottom of the RFL dipped polycaprolactam fabric. At block 214, once both sides of the RFL dipped polycaprolactam fabric are coated, the calendered fabric is sent through a series of rollers that are tensioned to cool the coated rubber. At block 216, the calendered rubber, hereinafter referred to as the first rubber wrapping compound, is wound. At block 218, the first rubber wrapping compound is divided into half and formed into two rolls, where one of the two rolls remains straight, i.e. without any bias cutting. At block 220, the other roll is fed into a bias cutter where the first rubber wrapping compound is bias cut at an angle the x-axis and the y-axis and rejoined to form a fabric which is angle-biased cut. In various embodiment, the angle-biased cut may be between 30° and 60°. In various embodiment, the angle-biased cut may be between 40° and 50°. In various embodiment, the angle-biased cut may be 45°. At block 222, the angle-biased cut fabric as well as the straight fabric are separately fed into a slitter where the angle-biased cut fabric and the straight fabric is slit into the required widths for manufacturing a guide roller. In various embodiments, the slitter may utilize a circular knife blade.

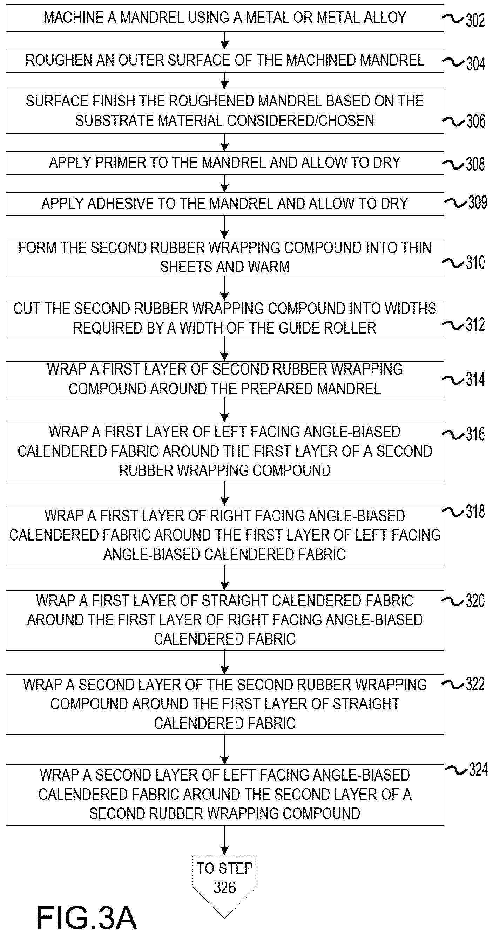

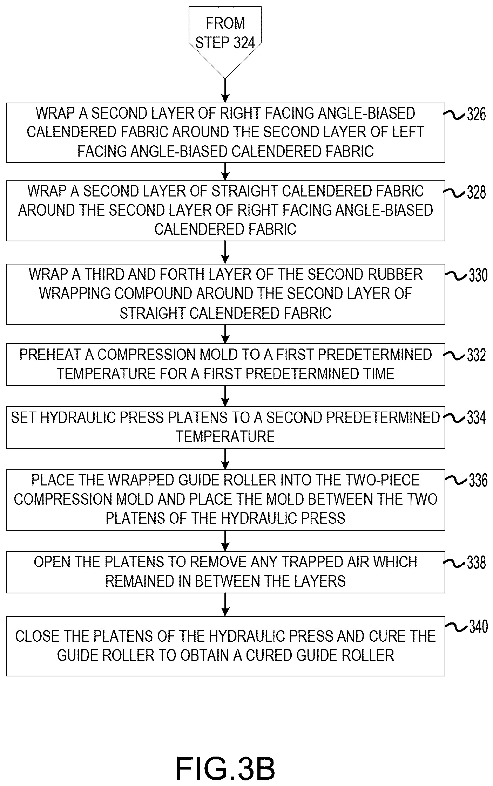

Referring to FIG. 3, a flowchart for manufacturing a layered guide roller is illustrated, in accordance with various embodiments. At block 302, a mandrel of a first circumference is machined using a metal or metal alloy. In various embodiments, the machining may include forming bearing slots for housing the bearings on which the guide roller will rotate. In various embodiments, the metal or metal alloy may be stainless steel, brass, or aluminum, among others. At block 304, the outer surface of the machined mandrel is roughened, i.e. through grit blasting. At block 306, the roughened mandrel is then surface finished based on the substrate material considered/chosen. In various embodiments, metal portions of the mandrel may undergo chemical treatments to reduce corrosion. In various embodiments, a surface coating for corrosion protection for Aluminum may be an anodize or chemical conversion coating and for brass may be an electroplated zinc coating.

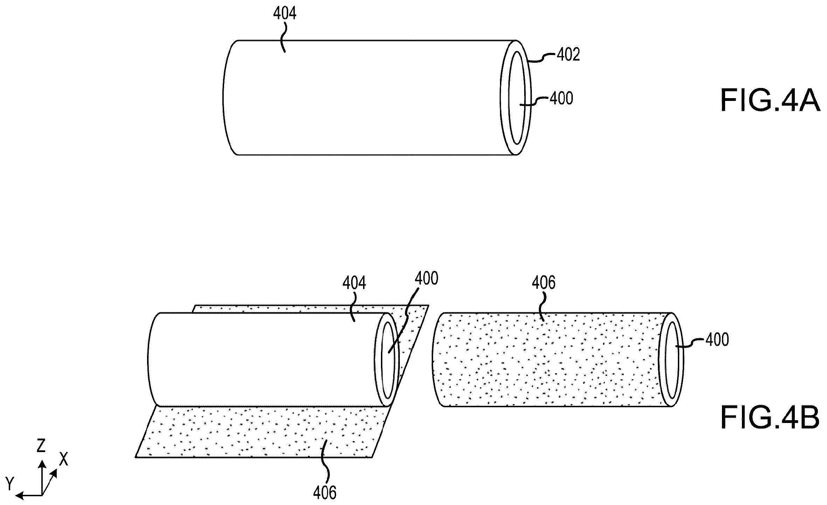

In various embodiments, bonding between the roughened mandrel and the second rubber wrapping compound may be enhanced via a primer and an adhesive. In various embodiments, the primer may be a rubber-to-substrate primer, such as Chemlok^{®} 205 primer and the adhesive may be a rubber-to-substrate adhesive, such as Chemlok^{®} 250 adhesive. At block 308, the primer is applied to the mandrel and allowed to dry and then, at block 309, the adhesive is applied to the mandrel and allowed to dry in a dust free environment to avoid any surface contamination. With temporary reference to FIG. 4A, a mandrel 400 with bearing slot 402 is coated with a primer and an adhesive 404 is illustrated, in accordance with various embodiments.

At block 310, the second rubber wrapping compound is formed into thin sheets of thickness around 2 mm (0.07874 inch) using a two-roll mill in which the second rubber wrapping compound may be warmed up by giving sufficient cuts. At block 312, once the second rubber wrapping compound is warmed up and formed out in a sheet form, the second rubber wrapping compound is cut into widths in accordance with a width of the guide roller. At block 314, a first layer of second rubber wrapping compound is circumferentially wrapped around the prepared mandrel. In various embodiments, the applied first layer of second rubber wrapping compound is consolidated using a hand stitcher or knurled roller to make sure the first layer of second rubber wrapping compound is sticking to the mandrel and little to no air is entrapped between mandrel and the first layer of second rubber wrapping compound. Additionally, in various embodiments, holes may be made (e.g., using pins or needles) in the first layer of second rubber wrapping compound for removal of entrapped air which will escape during the curing process. With temporary reference to FIG. 4B, a mandrel 400 coated with a primer and an adhesive 404 being wrapped with a first layer of second rubber wrapping compound 406 is illustrated, in accordance with various embodiments.

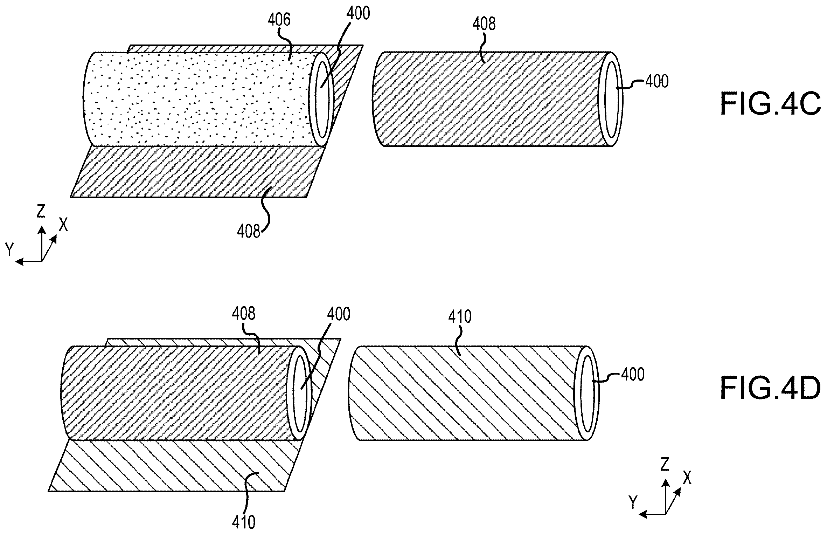

At block 316, a first layer of the angle-biased calendered fabric facing left is circumferentially wrapped around the first layer of a second rubber wrapping compound. In various embodiments, the applied first layer of left facing angle-biased calendered fabric is consolidated using a hand stitcher or knurled roller to make sure the first layer of left facing angle-biased calendered fabric is sticking to the first layer of second rubber wrapping compound and no air is entrapped between the first layer of second rubber wrapping compound and the first layer of left facing angle-biased calendered fabric. Additionally, in various embodiments, holes may be made (e.g., using pins or needles) in the first layer of left facing angle-biased calendered fabric for removal of entrapped air which will escape during curing process. With temporary reference to FIG. 4C, a mandrel 400 wrapped with a first layer of a second rubber wrapping compound 406 being wrapped with a first layer of left facing angle-biased calendered fabric 408 is illustrated, in accordance with various embodiments. In various embodiments, the splice joint of the first layer of left facing angle-biased calendered fabric is positioned 30-40° away from the splice of the first layer of second rubber wrapping compound.

At block 318, a first layer of right facing angle-biased calendered fabric is circumferentially wrapped around the first layer of left facing angle-biased calendered fabric. In various embodiments, the first layer of right facing angle-biased calendered fabric is consolidated using a hand stitcher or knurled roller to make sure the first layer of right facing angle-biased calendered fabric is sticking to the first layer of left facing angle-biased calendered fabric and no air is entrapped between the first layer of left facing angle-biased calendered fabric and the first layer of right facing angle-biased calendered fabric. Additionally, in various embodiments, holes (e.g., using pins or needles) may be made in the first layer of right facing angle-biased calendered fabric layer for removal of entrapped air which will escape during the curing process. With temporary reference to FIG. 4D, a mandrel 400 wrapped with a first layer of left facing angle-biased calendered fabric 408 being wrapped with a first layer of right facing angle-biased calendered fabric 410 is illustrated, in accordance with various embodiments. In various embodiments, the splice joint of the first layer of right facing angle-biased calendered fabric layer is positioned 30-40° away from the splice of the first layer of left facing angle-biased calendered fabric layer.

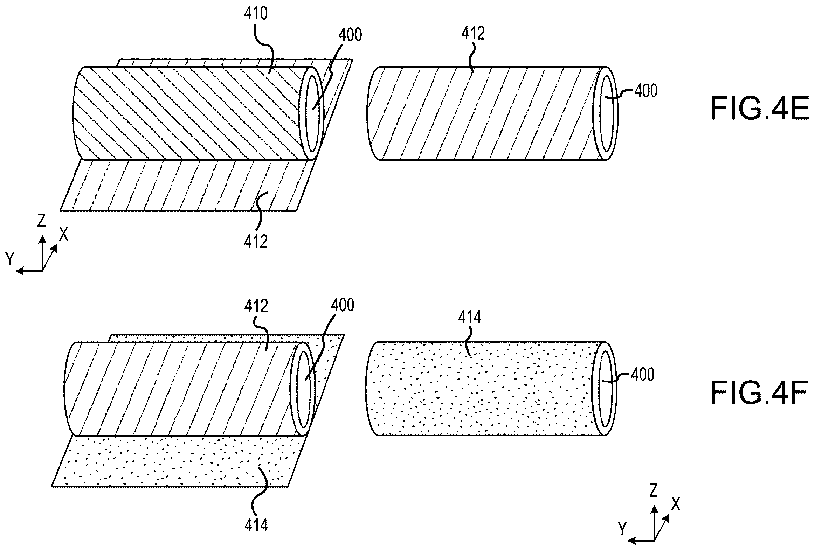

At block 320, a first layer of straight calendered fabric is circumferentially wrapped around the first layer of right facing angle-biased calendered fabric. In various embodiments, the first layer of straight calendered fabric is consolidated using a hand stitcher or knurled roller to make sure the first layer of straight calendered fabric is sticking to the first layer of right facing angle-biased calendered fabric and little to no air is entrapped between the first layer of right facing angle-biased calendered fabric and the first layer of straight calendered fabric. Additionally, in various embodiments, holes may be made (e.g., using pins or needles) in the first layer of straight calendered fabric for removal of entrapped air which will escape during curing process. With temporary reference to FIG. 4E, a mandrel 400 wrapped with a first layer of right facing angle-biased calendered fabric 410 being wrapped with a first layer of straight calendered fabric 412 is illustrated, in accordance with various embodiments. In various embodiments, the splice joint of the first layer of straight calendered fabric is positioned 30-40° away from the splice of the first layer of right facing angle-biased calendered fabric.

At block 322, a second layer of the second rubber wrapping compound is circumferentially wrapped around the first layer of straight calendered fabric. In various embodiments, the second layer of the second rubber wrapping compound is consolidated using a hand stitcher or knurled roller to make sure the second layer of the second rubber wrapping compound is sticking to the first layer of straight calendered fabric and no air is entrapped between the first layer of straight calendered fabric and the second layer of the second rubber wrapping compound. Additionally, in various embodiments, holes may be made (e.g., using pins or needles) in the second layer of the second rubber wrapping compound for removal of any entrapped air which will escape during curing process. With temporary reference to FIG. 4F, a mandrel 400 wrapped with a first layer of straight calendered fabric 412 being wrapped with second layer of the second rubber wrapping compound 414 is illustrated, in accordance with various embodiments. In various embodiments, the splice joint of the second layer of the second rubber wrapping compound is positioned 30-40° away from the splice of first layer of straight calendered fabric.

At block 324, a second layer of the angle-biased calendered fabric facing left is circumferentially wrapped around the second layer of a second rubber wrapping compound. In various embodiments, the second layer of left facing angle-biased calendered fabric is consolidated using a hand stitcher or knurled roller to make sure the second layer of left facing angle-biased calendered fabric is sticking to the second layer of second rubber wrapping compound layer and no air is entrapped between the second layer of second rubber wrapping compound and the second layer of left facing angle-biased calendered fabric. Additionally, in various embodiments, holes may be made (e.g., using pins or needles) in the second layer of left facing angle-biased calendered fabric for removal of any entrapped air which will escape during curing process. In various embodiments, the splice joint of the second layer of left facing angle-biased calendered fabric is positioned 30-40° away from the splice of the second layer of second rubber wrapping compound.

At block 326, a second layer of layer of the angle-biased calendered fabric facing right is circumferentially wrapped around the second layer of left facing angle-biased calendered fabric. In various embodiments, the second layer of right facing angle-biased calendered fabric is consolidated using a hand stitcher or knurled roller to make sure the second layer of right facing angle-biased calendered fabric is sticking to the second layer of left facing angle-biased calendered fabric and no air is entrapped between the second layer of left facing angle-biased calendered fabric and the second layer of right facing angle-biased calendered fabric. Additionally, in various embodiments, holes (e.g., using pins or needles) may be made in the second layer of right facing angle-biased calendered fabric for removal of any entrapped air which will escape during curing process. In various embodiments, the splice joint of the second layer of right facing angle-biased calendered fabric is positioned 30-40° away from the splice of second layer of the left facing angle-biased calendered fabric.

At block 328, a second layer of straight calendered fabric is circumferentially wrapped around the second layer of right facing angle-biased calendered fabric. In various embodiments, the second layer of straight calendered fabric is consolidated using a hand stitcher or knurled roller to make sure the second layer of straight calendered fabric is sticking to the second layer of right facing angle-biased calendered fabric and no air is entrapped between the second layer of right facing angle-biased calendered fabric and the second layer of straight calendered fabric. Additionally, in various embodiments, holes may be made (e.g., using pins or needles) in the second layer of straight calendered fabric for removal of entrapped air which will escape during curing process. In various embodiments, the splice joint of the second layer of straight calendered fabric is positioned 30-40° away from the splice of the second layer of right facing angle-biased calendered fabric.

At block 330, third and fourth layers of the second rubber wrapping compound are then wrapped around the second layer of straight calendered fabric layer. In various embodiments, the third and further layers of the second rubber wrapping compound are consolidated using a hand stitcher or knurled roller to make sure the third layer of the second rubber wrapping compound is sticking to the second layer of straight calendered fabric and the fourth layer of the second rubber wrapping compound is sticking to the third layer of the second rubber wrapping compound and no air is entrapped between the second layer of straight calendered fabric and the third layer of the second rubber wrapping compound and between the third layer of the second rubber wrapping compound and the fourth layer of the second rubber wrapping compound. Additionally, in various embodiments, holes may be made (e.g., using pins or needles) in the third and fourth layers of the second rubber wrapping compound for removal of entrapped air which will escape during curing process. In various embodiments, the splice joint of the third layer of the second rubber wrapping compound is positioned 30-40° away from the splice of the second layer of straight calendered fabric and the splice joint of the fourth layer of the second rubber wrapping compound is positioned 30-40° away from the splice of the third layer of the second rubber wrapping compound.

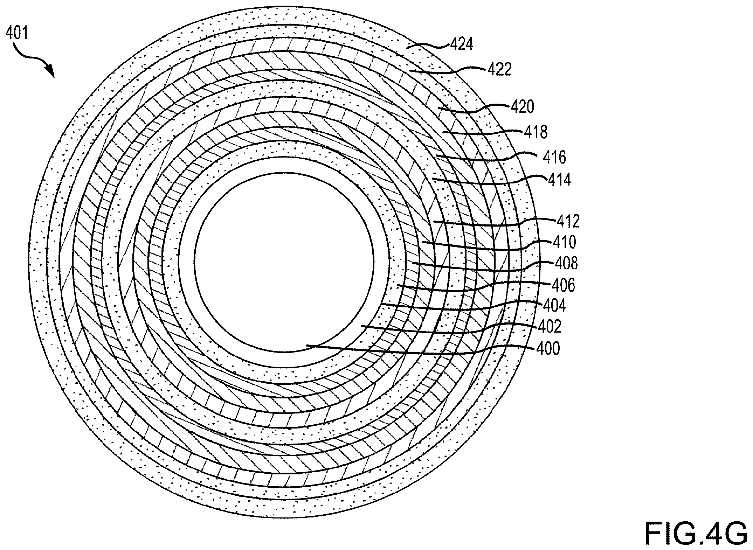

With temporary reference to FIG. 4G, a completely wrapped guided roller 401 is illustrated, in accordance with various embodiments. In various embodiments, mandrel 400 with bearing slot 402 is coated with a primer and an adhesive 404. In various embodiments, the primer and adhesive 404 is circumferentially wrapped with a first layer of a second rubber wrapping compound 406. In various embodiments, the first layer of a second rubber wrapping compound 406 is circumferentially wrapped with a first layer of left facing angle-biased calendered fabric 408. In various embodiments, the first layer of left facing angle-biased calendered fabric 408 is circumferentially wrapped with a first layer of right facing angle-biased calendered fabric 410. In various embodiments, the first layer of right facing angle-biased calendered fabric 410 is circumferentially wrapped with a first layer of straight calendered fabric 412. In various embodiments, the first layer of straight calendered fabric 412 is circumferentially wrapped with a second layer of the second rubber wrapping compound 414. In various embodiments, the second layer of a second rubber wrapping compound 414 is circumferentially wrapped with a second layer of left facing angle-biased calendered fabric 416. In various embodiments, the second layer of left facing angle-biased calendered fabric 416 is circumferentially wrapped with a second layer of right facing angle-biased calendered fabric 418. In various embodiments, the second layer of right facing angle-biased calendered fabric 418 is circumferentially wrapped with a second layer of straight calendered fabric 420. In various embodiments, the second layer of straight calendered fabric 420 is circumferentially wrapped with a third layer of the second rubber wrapping compound 422. In various embodiments, the third layer of the second rubber wrapping compound 422 is circumferentially wrapped with a fourth third layer of the second rubber wrapping compound 424.

In various embodiments, all the splice joints of the various layers are 30-40° away from each other so that the balance of the roller is maintained. In various embodiments, a two-piece compression mold is required to cure the guide roller. At block 332, a compression mold is preheated to a first predetermined temperature for a first predetermined time. In various embodiments, the first predetermined temperature may be between 130°C (266 degrees Fahrenheit) and 170°C (338 degrees Fahrenheit). In various embodiments, the first predetermined temperature may be between 140°C (284 degrees Fahrenheit) and 160°C (320 degrees Fahrenheit). In various embodiments, the first predetermined temperature may be 150°C (302 degrees Fahrenheit). In various embodiments, the first predetermined time may be between 1 minute and 5 minutes. In various embodiments, the first predetermined time may be between 2 minutes and 4 minutes. In various embodiments, the first predetermined time may be 2 minutes. At block 334, hydraulic press platens may be set to a second predetermined temperature. In various embodiments, the second predetermined temperature may be between 130°C (266 degrees Fahrenheit) and 170°C (338 degrees Fahrenheit). In various embodiments, the second predetermined temperature may be between 140°C (284 degrees Fahrenheit) and 160°C (320 degrees Fahrenheit). In various embodiments, the second predetermined temperature may be 150°C (302 degrees Fahrenheit).

At block 336, the wrapped guide roller is placed into the two-piece compression mold and the mold is placed between the two platens of the hydraulic curing press. In various embodiments the platens are closed for a second predetermined time period. In various embodiments, the second predetermined time may be between 2 seconds and 10 seconds. In various embodiments, the first predetermined time may be between 3 seconds and 8 seconds. In various embodiments, the first predetermined time may be 5 seconds. At block 338, after the second predetermined time period expires, the platens are opened to remove trapped air which remains in between the layers. In various embodiments, this process is referred to as bumping. At block 340, after bumping, the platens of the hydraulic press are closed, and the guide roller is cured to obtain a cured guide roller. In various embodiment, the curing process may take between 15 to 30 minutes. In various embodiment, the curing process may take between 18 to 28 minutes. In various embodiment, the curing process may take between 20-25 minutes. In various embodiments, the curing time may vary based on the rheological properties of the first rubber wrapping compound and the second rubber wrapping compound.

In various embodiments, after curing, the cured guide roller is removed from the mold and allowed to cool. In various embodiments, a surface of the cured guide roller may undergo grinding to obtain a surface of relatively uniform roughness. In various embodiments, after grinding, the guide roller is thoroughly cleaned, and one or more coats of polytetrafluoroethylene (PTFE) may be applied on the roughened guide roller. In that regard, once the one or more coats of polytetrafluoroethylene (PTFE) are applied on the roughened guide roller and the guide roller dries, then the guide roller is ready to be installed in a cargo compartment of an aircraft.

In various embodiments, one or more rubber compounds may be generated for producing a second guide roller utilizing injection molding. In various embodiments, a first rubber injection molding compound, 'Compound C,' starts with carboxylated nitrile rubber (XNBR) as the base polymer. In various embodiments, the XNBR may have an acrylonitrile content of between 22% and 42% with a Mooney viscosity of around 48 and 68 Mooney units (MU). In various embodiments, the XNBR may have an acrylonitrile content of between 27% and 37% with a Mooney viscosity of between 53 and 73 Mooney units (MU). In various embodiments, the XNBR has an acrylonitrile content of 32.5% with a Mooney viscosity of around 58 Mooney units (MU). In various embodiments, the reinforcing filler is monolayer graphene with a particle size (platelet) of between 4 micrometers (157.5 microinches) and 16 micrometers (629.9 microinches). In various embodiments, the reinforcing filler is monolayer graphene with a particle size (platelet) of between 7 micrometers (275.6 microinches) and 13 micrometers (511.8 microinches). In various embodiments, the reinforcing filler is monolayer graphene with a particle size (platelet) of 10 micrometers (393.7 microinches). In various embodiments, other compounding ingredients includes antioxidants, resins, plasticizers, accelerator activators, fungicides, accelerators, and/or magnesium carbonate treated and high oil treated version of sulfur for improved dispersion in XNBR.

In various embodiments, the materials of the first rubber injection molding compound may include: a base polymer or elastomer, such as carboxylated nitrile rubber (XNBR); an accelerator activator, such as zinc oxide (ZnO); an accelerator activator, such as Stearic Acid; a reinforcing filler, such as graphene; a resin, such as phenol formaldehyde (PF) resin; an antiozonant, such as Microcrystalline (MC) wax; an antioxidant, such as 4,4'-Bis(alpha,alpha-dimethylbenzyl)diphenylamine (CDPA); a plasticizer, such as Dioctyl Sebacate; a fungicide additive; an accelerator, such as N,N-Dicyclohexyl-2-benzothiazolsulfene amide (DCBS); an accelerator-sulfur doner, such as tetra methyl thiuram disulfide (TMTD); and a high-oil treated sulfur, such as magnesium carbonate (MC) treated sulfur. In various embodiments, the XNBR may be between 80 to 120 parts per hundred. In various embodiments, the XNBR may be between 90 to 110 parts per hundred. In various embodiments, the XNBR may be 100 parts per hundred. In various embodiments, the ZnO may be between 1 to 9 parts per hundred. In various embodiments, the ZnO may be between 3 to 9 parts per hundred. In various embodiments, the ZnO may be 5 parts per hundred. In various embodiments, the Stearic Acid may be between .5 to 3.5 parts per hundred. In various embodiments, the Stearic Acid may be between 1 to 3 parts per hundred. In various embodiments, the Stearic Acid may be 2 parts per hundred. In various embodiments, the Graphene may be between 2 to 18 parts per hundred. In various embodiments, the Graphene may be between 5 to 15 parts per hundred. In various embodiments, the Graphene may be 10 parts per hundred. In various embodiments, the PF resin may be between 1 to 9 parts per hundred. In various embodiments, the PF resin may be between 3 to 7 parts per hundred. In various embodiments, the PF resin may be 5 parts per hundred. In various embodiments, the MC wax may be between .5 to 3.5 parts per hundred. In various embodiments, the MC wax may be between 1 to 3 parts per hundred. In various embodiments, the MC wax may be 2 parts per hundred. In various embodiments, the CDPA may be between 0.4 to 2.4 parts per hundred. In various embodiments, the CDPA may be between .9 to 1.9 parts per hundred. In various embodiments, the CDPA may be 1.4 parts per hundred. In various embodiments, the Dioctyl Sebacate may be between 1 to 16 parts per hundred. In various embodiments, the Dioctyl Sebacate may be between 4 to 12 parts per hundred. In various embodiments, the Dioctyl Sebacate may be 8 parts per hundred. In various embodiments, the Fungicide may be between 0.1 to 0.9 parts per hundred. In various embodiments, the Fungicide may be between 0.3 to 0.7 parts per hundred. In various embodiments, the Fungicide may be 0.5 parts per hundred. In various embodiments, the DCBS may be between 0.3 to 1.7 parts per hundred. In various embodiments, the DCBS may be between .7 to 1.3 parts per hundred. In various embodiments, the DCBS may be 1 part per hundred. In various embodiments, the TMTD may be between 0.5 to 1.9 parts per hundred. In various embodiments, the TMTD may be between 1 to 1.4 parts per hundred. In various embodiments, the TMTD may be 1.2 parts per hundred. In various embodiments, the MC treated sulfur may be between 0.1 to 0.7 parts per hundred. In various embodiments, the MC treated sulfur may be between 0.3 to 0.5 parts per hundred. In various embodiments, the MC treated sulfur may be 0.4 parts per hundred.

In various embodiments, the first rubber injection molding compound may be mixed in two stages. In various embodiments, stage 1, which may be referred to as a master batch, includes the base polymer or elastomer along with reinforcing fillers, accelerator activators, resins, plasticizers, fungicides, anti-ozonants, and anti-oxidants. In various embodiments, mixing of the master batch of the first rubber injection molding compound utilizes an internal mixer with intermeshing type rotors and is mixed in a similar manner to stage 1 of the first rubber injection molding compound. In various embodiments, the order that materials are added to the master batch of the first rubber injection molding compound and a mixing action that is performed as each material is added is provided with regard to Compound 'A' described previously. In various embodiments, the order that materials are added to the final batch of the first rubber injection molding compound and a mixing action that is performed as each material is added is provided with regard to Compound 'A' described previously. In various embodiments, the rubber temperature of the final batch should not be allowed to go more than 100-105°C. In various embodiments, the maturation or aging of the master batch of the first rubber injection molding compound and final batch of the first rubber injection molding compound is approximately 24 hours at each stage.

In various embodiments, a second rubber injection molding compound, 'Compound D,' is produced. In various embodiments, the second rubber injection molding compound is formulated using hydrogenated nitrile rubber (HNBR) as the base polymer. In various embodiments, two different types of HNBR may be utilized. In various embodiments, the first HNBR may have an acrylonitrile content of between 24% and 44% with a Mooney viscosity of around 60 and 80 Mooney units (MU). In various embodiments, the HNBR may have an acrylonitrile content of between 29% and 39% with a Mooney viscosity of between 65 and 75 Mooney units (MU). In various embodiments, the HNBR has an acrylonitrile content of 34% with a Mooney viscosity of around 70 Mooney units (MU). In various embodiments, the residual double bond of the HNBR may be < 1.5%. In various embodiments, the residual double bond of the HNBR may be <1.2%. In various embodiments, the residual double bond of the HNBR may be <0.9%. In various embodiments, the second HNBR may have an improved grade, i.e. good physical properties with improved processing characteristics. In various embodiments, the two different types of HNBR may be blended at 70 to 90 parts per hundred rubber (phr) and 30 to 10 phr, respectively, to have smooth processing for higher production outputs. In various embodiments, the reinforcing filler is monolayer graphene with a particle size (platelet) of between 4 micrometers (157.5 microinches) and 16 micrometers (629.9 microinches). In various embodiments, the reinforcing filler is monolayer graphene with a particle size (platelet) of between 7 micrometers (275.6 microinches) and 13 micrometers (511.8 microinches). In various embodiments, the reinforcing filler is monolayer graphene with a particle size (platelet) of 10 micrometers (393.7 microinches). In various embodiments, other compounding ingredients includes antioxidants, resins, plasticizers, accelerator activators, fungicides, crosslinking agent, and crosslinking peroxide.

In various embodiments, the materials of the second rubber injection molding compound may include: a base polymer or elastomer, such as hydrogenated nitrile rubber (HNBR); a reinforcing filler, such as graphene; a fungicide additive; an antioxidant, such as 4,4'-Bis(alpha,alpha-dimethylbenzyl)diphenylamine (CDPA); an accelerator activator, such as magnesium oxide (MgO); an antioxidant, such as Vulkanox ZMB2; an accelerator activator, such as zinc oxide (ZnO); an cross-linking agent for peroxide cure, such as triallyl isocyanurate (TAIC 70); and a cross-linking agent, such as Perkadox 14-40B-PD-S. In various embodiments, a first HNBR, such as Therban 3407, may be between 50 to 90 parts per hundred. In various embodiments, the first HNBR may be between 60 to 80 parts per hundred. In various embodiments, the first HNBR may be 70 parts per hundred. In various embodiments, a second HNBR, such as Therban AT3404, may be between 10 to 50 parts per hundred. In various embodiments, the second HNBR may be between 20 to 40 parts per hundred. In various embodiments, the second HNBR may be 30 parts per hundred. In various embodiments, the Graphene may be between 2 to 18 parts per hundred. In various embodiments, the Graphene may be between 5 to 15 parts per hundred. In various embodiments, the Graphene may be 10 parts per hundred. In various embodiments, the Fungicide may be between 0.1 to 0.9 parts per hundred. In various embodiments, the Fungicide may be between 0.3 to 0.7 parts per hundred. In various embodiments, the Fungicide may be 0.5 parts per hundred. In various embodiments, the CDPA may be between 0.5 to 2.5 parts per hundred. In various embodiments, the CDPA may be between 1 to 2 parts per hundred. In various embodiments, the CDPA may be 1.5 parts per hundred. In various embodiments, the MgO may be between 1 to 5 parts per hundred. In various embodiments, the MgO may be between 2 to 4 parts per hundred. In various embodiments, the MgO may be 3 parts per hundred. In various embodiments, the Vulkanox ZMB2 may be between 0.1 to 0.9 parts per hundred. In various embodiments, the Vulkanox ZMB2 may be between 0.3 to 0.7 parts per hundred. In various embodiments, the Vulkanox ZMB2 may be 0.5 parts per hundred. In various embodiments, the ZnO may be between 1 to 9 parts per hundred. In various embodiments, the ZnO may be between 3 to 7 parts per hundred. In various embodiments, the ZnO may be 5 parts per hundred. In various embodiments, the TAIC 70 may be between 1 to 5 parts per hundred. In various embodiments, the TAIC 70 may be between 2 to 4 parts per hundred. In various embodiments, the TAIC 70 may be 3 parts per hundred. In various embodiments, the Perkadox may be between 5 to 15 parts per hundred. In various embodiments, the Perkadox may be between 7 to 12 parts per hundred. In various embodiments, the Perkadox may be 10 parts per hundred.

In various embodiments, the formulation for the second rubber injection molding compound provided in Table 6 may be mixed in two stages. In various embodiments, stage 1, which may be referred to as a master batch, includes the base polymer or elastomer along with reinforcing fillers, accelerator activators, resins, plasticizers, fungicides, anti-ozonants, and anti-oxidants. In various embodiments, mixing of the master batch of the second rubber injection molding compound utilizes an internal mixer with intermeshing type rotors and is mixed in a similar manner to stage 1 of the first rubber injection molding compound. In various embodiments, mixing of the final batch of the second rubber injection molding compound utilizers a two-roll mill in a similar manner to stage 2 of the first rubber injection molding compound. In various embodiments, the order that materials are added to the master batch of the second rubber injection molding compound and a mixing action that is performed as each material is added is provided with regard to Compound 'A' described previously. In various embodiments, the order that materials are added to the final batch of the second rubber injection molding compound and a mixing action that is performed as each material is added is provided with regard to Compound 'A' described previously. In various embodiments, the rubber temperature of the final batch should not be allowed to go more than 100-105°C. In various embodiments, the maturation or aging of the master batch of the second rubber injection molding compound and final batch of the second rubber injection molding compound is approximately 24 hours at each stage. In various embodiments, the first rubber injection molding compound and the second rubber injection molding compound are utilized for injection into the mandrels.

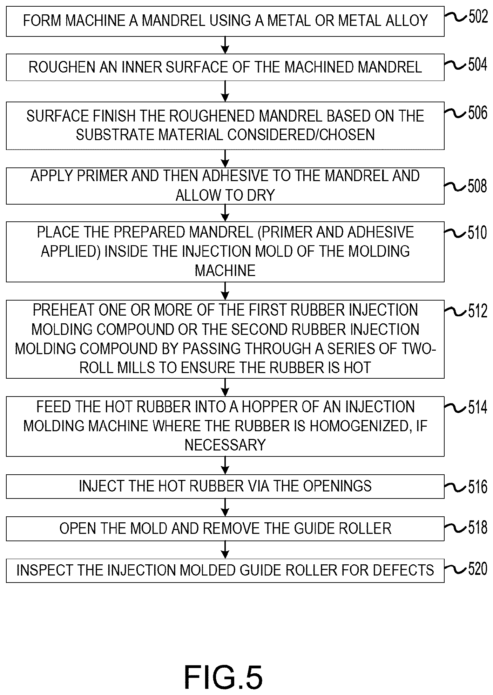

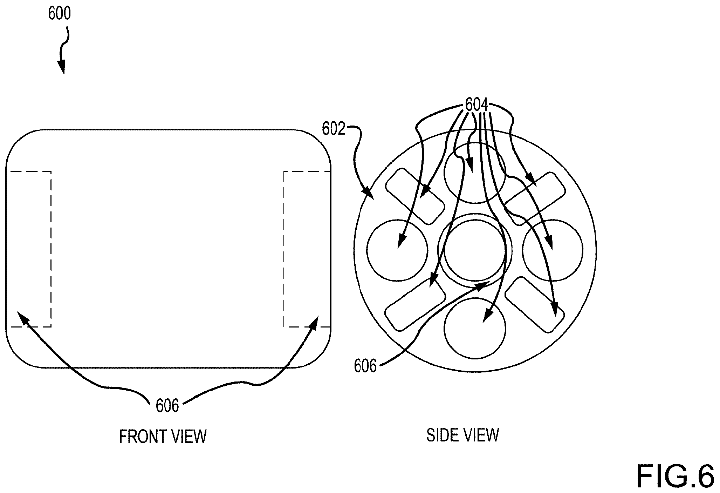

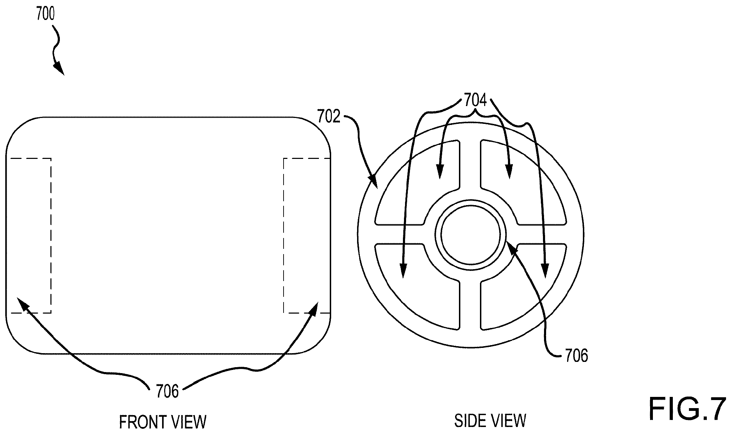

Referring to FIG. 5, a flowchart for manufacturing an injection molded guide roller is illustrated, in accordance with various embodiments. At block 502, a mandrel is formed/machined using a metal or metal alloy. In various embodiments, the forming may include forming a plurality of cavities within the mandrel. In various embodiments, the forming may include forming bearing slots for housing the bearings on which the guide roller will rotate. With temporary reference to FIG. 6, an end 602 of a mandrel 600 with a bearing slots 606 including a plurality of openings 604 through which the rubber compound will be injected so as to provide a uniform injection process is illustrated, in accordance with various embodiments. With temporary reference to FIG. 7, an end 702 of a mandrel 700 with a bearing slots 706 including a plurality of openings 704 through which the rubber compound will be injected so as to provide a uniform injection process is illustrated, in accordance with various embodiments. At block 504, an inner surface of the machined mandrel is roughened, i.e. through grit blasting. At block 506, the roughened mandrel is then surface finished based on the substrate material considered/chosen. In various embodiments, metal portions of the mandrel may undergo chemical treatments to reduce corrosion.

In various embodiments, bonding between the roughened mandrel and the injection molding compound may be enhanced via a primer and an adhesive. In various embodiments, the primer may be a rubber-to-substrate primer, such as Chemlok^{®} 205 primer and the adhesive may be a rubber-to-substrate adhesive, such as Chemlok^{®} 250 adhesive. At block 508, a primer is applied to an inside of the plurality of cavities of the mandrel and allowed to dry and then, an adhesive is applied to the inside of the plurality of cavities of the mandrel and allowed to dry in a dust free environment to avoid any surface contamination.

At block 510, the prepared mandrel (primer and adhesive applied) is placed inside the injection mold of the molding machine. At block 512, one or more of the first rubber injection molding compound or the second rubber injection molding compound is preheated by passing through a series of two-roll mills to ensure the rubber is hot. At block 514, the heated first rubber injection molding compound or the second rubber injection molding compound is then fed into a hopper of an injection molding machine where the rubber is homogenized, if necessary. At block 516, the hot rubber is injected into the plurality of cavities of the mandrel via openings at ends of the mandrel. In various embodiments, the mold remains closed for a predetermined time period to complete the curing process. In various embodiment, the curing process may take between 15 to 30 minutes. In various embodiment, the curing process may take between 18 to 28 minutes. In various embodiment, the curing process may take between 20-25 minutes. At block 518, once the curing is complete, the mold is opened, and the guide roller is removed. At block 520, the injection molded guide roller is inspected for defects. In various embodiments, the curing time may vary based on the rheological properties of the first rubber wrapping compound and the second rubber wrapping compound.

In various embodiments, typical types of loading that the guide roller undergoes may be sudden, thrust, majorly radial, and partially axial, among others. Considering the loads applied on the guide roller, the bearings, such as bearing that would fit into bearing slots 606 of FIG. 6 and bearing slots 706 of FIG. 7, would be cylindrical roller bearings. In various embodiments, double row cylindrical sealed bearings may be utilized for predominantly radial and secondary axial loads. In various embodiments, sealed bearings may be utilized to avoid debris, dust, and other foreign materials from entering the bearings, thereby rendering the bearing unusable and eventually leading to uneven wear (cutting, chipping) of the roller material on the guide roller. In various embodiment, the bearings may be dipped in liquid nitrogen before being press fitted into the bearing slots. In various embodiments, a liquid nitrogen dipping process may be employed to shrink the bearings which allows the bearings to perfectly fit into the bearing slots and then expand to secure the bearings in the bearing slots.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method of manufacturing a guide roller (22) for a cargo doorway of an aircraft, comprising:
forming a mandrel (600, 700) having a first end (602, 702), a second end, and a plurality of cavities disposed between the first end and the second end; and
**characterised by** injecting a rubber injection molding compound into an inside of the plurality of cavities of the mandrel via openings (604, 704) in the first end or the second end of the mandrel.

2. The method of claim 1, further comprising:
prior to injecting the rubber injection molding compound into the plurality of cavities of the mandrel (600, 700), coating the plurality if cavities of the mandrel with a primer and then with an adhesive.

3. The method of claim 1, further comprising: wherein, prior to injecting the rubber injection molding compound into the plurality of cavities of the mandrel (600, 700) via the openings (604, 704), roughening an inner surface of each of the plurality of cavities of the mandrel; and optionally:
after roughening, passivating the plurality of cavities of the mandrel and the at least one end cap.

4. The method of any preceding claim, wherein the rubber injection molding compound comprises carboxylated nitrile rubber, XNBR, as the base polymer, a reinforcing filler and at least one of antioxidants, resins, plasticizers, accelerator activators, fungicides, accelerators, or magnesium carbonate treated and high oil treated version of sulfur.

5. The method of claim 4, wherein the reinforcing filler is monolayer graphene with a particle size (platelet) of between 4 micrometers and 16 micrometers.

6. The method of any of claims 1 to 3, wherein the rubber injection molding compound comprises hydrogenated nitrile rubber, HNBR, as the base polymer, a reinforcing filler and at least one of antioxidants, resins, plasticizers, accelerator activators, fungicides, crosslinking agent, or crosslinking peroxide.

7. The method of claim 6, wherein the reinforcing filler is monolayer graphene with a particle size (platelet) of between 4 micrometers and 16 micrometers.

8. The method of any of claims 1 to 7, further comprising:
disposing a bearing in each end (602, 702) of the mandrel (600, 700).

## Patentansprüche

1. Verfahren zum Herstellen einer Führungsrolle (22) für eine Frachttüröffnung eines Luftfahrzeugs, umfassend:
Bilden eines Dorns (600, 700), der ein erstes Ende (602, 702), ein zweites Ende und eine Vielzahl von Hohlräumen aufweist, die zwischen dem ersten Ende und dem zweiten Ende angeordnet sind; und
**gekennzeichnet durch** Einspritzen einer Kautschukspritzgussverbindung in ein Inneres der Vielzahl von Hohlräumen des Dorns über Öffnungen (604, 704) an dem ersten oder an dem zweiten Ende des Dorns.

2. Verfahren nach Anspruch 1, ferner umfassend:
Vor dem Einspritzen der Kautschukspritzgussverbindung in die Vielzahl von Hohlräumen des Dorns (600, 700), Beschichten der Vielzahl von Hohlräumen des Dorns mit einer Grundierung und anschließend mit einem Klebstoff.

3. Verfahren nach Anspruch 1, ferner umfassend:
wobei vor dem Einspritzen der Kautschukspritzgussverbindung in die Vielzahl von Hohlräumen des Dorns (600, 700) über die Öffnungen (604, 704) eine innere Oberfläche jedes der Vielzahl von Hohlräumen des Dorns aufgeraut wird; und optional:
Nach dem Aufrauen, Passivieren der Vielzahl von Hohlräumen des Dorns und der mindestens einen Endkappe.

4. Verfahren nach einem der vorhergehenden Ansprüche, wobei die Kautschukspritzgussverbindung carboxylierten Nitrilkautschuk (XNBR) als Basispolymer, einen Verstärkungsfüllstoff und mindestens eines von Antioxidantien, Harzen, Weichmachern, Beschleunigeraktivatoren, Fungiziden, Beschleunigern oder einer mit Magnesiumcarbonat und in hohem Maße mit Öl behandelten Variante von Schwefel umfasst.

5. Verfahren nach Anspruch 4, wobei der Verstärkungsfüllstoff einlagiges Graphen mit einer Partikelgröße (Plättchengröße) zwischen 4 Mikrometern und 16 Mikrometern ist.

6. Verfahren nach einem der Ansprüche 1 bis 3, wobei die Kautschukspritzgussverbindung als Basispolymer hydrierten Nitrilkautschuk, HNBR, einen Verstärkungsfüllstoff und mindestens eines von Antioxidantien, Harzen, Weichmachern, Beschleunigeraktivatoren, Fungiziden, Vernetzungsmittel oder Vernetzungsperoxid umfasst.

7. Verfahren nach Anspruch 6, wobei der Verstärkungsfüllstoff einlagiges Graphen mit einer Partikelgröße (Plättchengröße) zwischen 4 Mikrometern und 16 Mikrometern ist.

8. Verfahren nach einem der Ansprüche 1 bis 7, ferner umfassend: Anordnen eines Lagers an jedem Ende (602, 702) des Dorns (600, 700).

## Revendications

1. Procédé de préparation d'un rouleau de guidage (22) pour une porte de chargement d'un aéronef, comprenant :
la formation d'un mandrin (600, 700) ayant une première extrémité (602, 702), une seconde extrémité et une pluralité de cavités disposées entre la première extrémité et la seconde extrémité ; et
**caractérisé par** l'injection d'un composé de moulage par injection de caoutchouc dans un intérieur de la pluralité de cavités du mandrin par l'intermédiaire d'ouvertures (604, 704) dans la première extrémité ou la seconde extrémité du mandrin.

2. Procédé selon la revendication 1, comprenant en outre :
avant d'injecter le composé de moulage par injection de caoutchouc dans la pluralité de cavités du mandrin (600, 700), le revêtement de la pluralité de cavités du mandrin d'un apprêt puis d'un adhésif.

3. Procédé selon la revendication 1, comprenant en outre :
dans lequel, avant d'injecter le composé de moulage par injection de caoutchouc dans la pluralité de cavités du mandrin (600, 700) par l'intermédiaire des ouvertures (604, 704), la rugosification d'une surface interne de chacune de la pluralité de cavités du mandrin ; et éventuellement :
après la rugosification, la passivation de la pluralité de cavités du mandrin et de l'au moins un capuchon d'extrémité.

4. Procédé selon une quelconque revendication précédente, dans lequel le composé de moulage par injection de caoutchouc comprend du caoutchouc nitrile carboxylé, XNBR, comme polymère de base, une charge de renforcement et au moins l'un parmi des antioxydants, résines, plastifiants, activateurs d'accélérateur, fongicides, accélérateurs ou une version traitée au carbonate de magnésium et traité à haut taux d'huile de soufre.

5. Procédé selon la revendication 4, dans lequel la charge de renforcement est du graphène monocouche avec une taille de particule (plaquette) comprise entre 4 micromètres et 16 micromètres.

6. Procédé selon l'une quelconque des revendications 1 à 3, dans lequel le composé de moulage par injection de caoutchouc comprend du caoutchouc nitrile hydrogéné, HNBR, comme polymère de base, une charge de renforcement et au moins l'un parmi des antioxydants, résines, plastifiants, activateurs d'accélérateur, fongicides, agent de réticulation, ou peroxyde de réticulation.

7. Procédé selon la revendication 6, dans lequel la charge de renforcement est du graphène monocouche avec une taille de particule (plaquette) comprise entre 4 micromètres et 16 micromètres.

8. Procédé selon l'une quelconque des revendications 1 à 7, comprenant en outre :
la disposition d'un roulement dans chaque extrémité (602, 702) du mandrin (600, 700).
